# FASCICULE DE BREVET EUROPEEN

(11) **EP 1 626 251 B1**
(45) Date de publication et mention de la délivrance du brevet: **09.04.2008**
(21) Numéro de dépôt: 05291680.6
(22) Date de dépôt: 05.08.2005
(51) Int. Cl.: G01C 23/00, G06T 17/50, G01S 13/94

(54) **Procédé d'affichage d'informations cartographiques et de zones aéronautiques sur écran d'aéronef**
Verfahren zur Anzeige von Karteninformationen und von Aeronautikzonen auf einer Flugzeuganzeige
Method for the display of cartographic information and of aeronautical areas on an aeroplane screen

(30) Priorité: 10.08.2004 FR 0408801
(43) Date de publication de la demande: 15.02.2006
(73) Titulaire: THALES, 92200 Neuilly sur Seine (FR)
(72) Inventeur: Servantie, Xavier, 94117 Arcueil cedex (FR); Goetz, Alain, 94117 Arcueil cedex (FR); Filliatre, Eric, 94117 Arcueil cedex (FR)
(74) Mandataire: Guérin, Michel

(56) Documents cités:
- EP-A- 1 087 210
- US-A- 5 936 552
- US-A1- 2002 143 439
- US-A1- 2003 193 411

## Description

Le domaine de l'invention est celui des procédés de synthèse d'images cartographiques présentées sur des dispositifs de visualisation. Ce procédé s'applique plus spécifiquement aux aéronefs susceptibles d'évoluer en vol à vue, ces aéronefs pouvant être des aéronefs militaires ou à voilure tournante ou appartenant à l'aviation générale.

Sur les aéronefs modernes, la planche de bord comporte des visualisations électroniques permettant de présenter au pilote les informations importantes concernant la conduite de vol ou la navigation.

Les informations utiles à la navigation sont :
- des données cartographiques concernant le terrain survolé, issues de bases de données numériques ;
- des informations liées aux cartes aéronautiques comme les obstacles, les balises, les routes aériennes, les zones aéronautiques, les TMA, acronyme anglo-saxon de «Terminal Management Approach », les CTR, acronyme anglo-saxon de «Control Zone ».

L'état de la technique est décrit dans les documents EP-A-1 087 210 et US 2002/0143 439.

Une zone aéronautique est une zone définie par la réglementation aéronautique. Les principaux types de zones sont les TMA, les CTR et les zones à accès restreint ou interdit. Ces zones sont limitées par un contour géographique, par une altitude plafond et une altitude plancher. Ces zones ont également un nom et une fréquence radio associés.

Les zones aéronautiques sont habituellement représentées par une série de figures géométriques, notamment sur les cartes aéronautiques papier. Elles sont classiquement représentées par un trait continu fin, définissant la limite de la zone et par une bordure semi-transparente indiquant le coté intérieur de la zone. Le trait et la bordure sont colorés en fonction du type de la zone aéronautique, la couleur étant définie par la réglementation aérienne. Par exemple, les zones interdites d'accès sont en rouge, les zones à accès restreint en magenta.

Un cartouche est associé à chaque zone comportant une légende dont le contenu est réglementé. Le cartouche comporte le nom de la zone et éventuellement sa fréquence radio, son type, son plafond et son plancher.

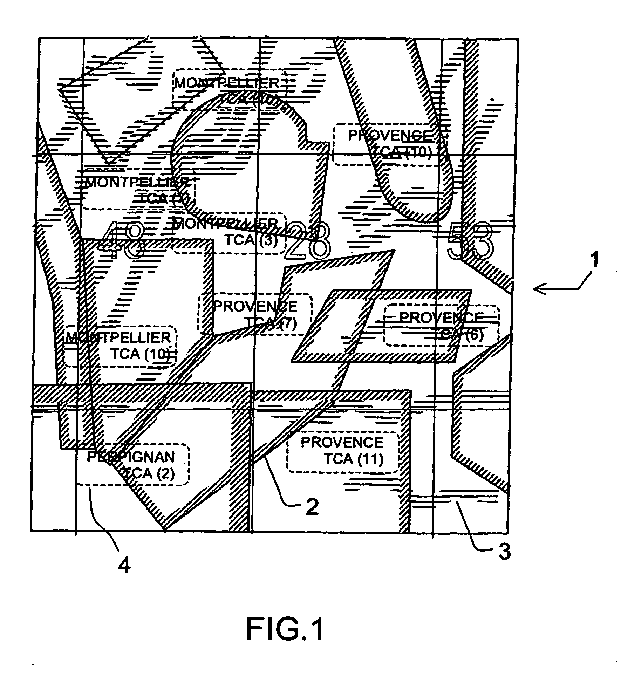

Les présentations de cartographie numérique sur visualisations électroniques intègrent rarement les informations liées aux cartes aéronautiques qui comportent une trop grande densité d'informations. La figure 1 représente une image cartographique 1 en vue de dessus d'un terrain survolé par un aéronef, l'image cartographique comportant à la fois des informations de relief 3 figurées en traits hachurés horizontal et des informations 2 liées aux cartes aéronautiques. Le pourtour des zones aéronautiques est figuré en traits hachurés obliques entourés d'un trait fin continu. Les zones aéronautiques 2 se chevauchent, rendant la carte difficilement lisible. Tous les cartouches 4 sont affichés, ce qui alourdit encore l'affichage sans réellement donner l'information importante au pilote. Par conséquent, la présentation devient illisible pour l'utilisateur.

Cependant, un aéronef se déplaçant dans un espace aérien doit savoir anticiper la rentrée dans une zone aéronautique. Selon les cas, le pilote doit éviter la zone, contacter une fréquence radio avant d'y entrer ou prendre des dispositions particulières relatives à la réglementation aérienne. II est donc important pour un pilote de connaître la position géographique de ces zones et d'anticiper la rentrée dans ces zones.

Le procédé selon l'invention permet de présenter les informations utiles des cartes aéronautiques tout en conservant une lisibilité acceptable pour l'utilisateur. La sécurité du vol est ainsi notablement renforcée.

Plus précisément, l'invention a pour objet un procédé de synthèse, sur un écran d'aéronef, d'au moins une première fenêtre représentant une image cartographique en vue de dessus d'un terrain survolé par ledit aéronef, l'image cartographique étant élaborée à partir d'une première information altimétrique du terrain survolé et d'une seconde information représentant les zones aéronautiques, caractérisé en ce que le procédé affiche, dans ladite fenêtre, une représentation altimétrique du terrain survolé comportant les zones aéronautiques comprises dans une plage d'altitude correspondant à la phase de vol de l'aéronef, lorsque l'image cartographique du terrain survolé est une vue de dessus, la limite d'une zone aéronautique est représentée par un trait plein fin coloré prolongé par une bordure semi-transparente colorée située à l'intérieur de ladite zone, la couleur du trait et de la bordure dépendant du type de zone.

Avantageusement, le procédé comporte au moins des étapes de filtrage automatique des zones aéronautiques en fonction de la localisation géographique et de la position verticale de l'aéronef. Les étapes de filtrage en fonction de la position verticale de l'aéronef sont :
- Calcul des limites d'altitude inférieure et supérieure de l'aéronef, lesdites limites étant déterminées en ajoutant et en retranchant à l'altitude courante de l'aéronef une marge déterminée.
- Détermination des zones aéronautiques dont le plafond est supérieur à la limite d'altitude inférieure et le plancher inférieur à la limite d'altitude supérieure.

Avantageusement, le procédé synthétise au moins une seconde fenêtre représentant une représentation altimétrique en coupe verticale du terrain survolé, comportant les zones aéronautiques vues en coupe verticale.

Selon un mode particulier de mise en oeuvre du procédé, lorsque l'image cartographique du terrain survolé est une vue de dessus, la représentation altimétrique comporte un ombrage représentatif du relief du terrain.

Avantageusement, lorsque l'image cartographique du terrain survolé est une vue de dessus, la limite d'une zone aéronautique est représentée par un trait plein fin coloré prolongé par une bordure semi-transparente colorée située à l'intérieur de la dite zone, la couleur du trait et de la bordure dépendant du type de zone. Le procédé affiche au moins un cartouche d'information correspondant à une zone aéronautique, ledit cartouche étant sélectionné par l'utilisateur dudit procédé, le cartouche comporte le nom de la zone, sa fréquence radio, son type, son plafond et son plancher.

L'invention concerne également un écran de visualisation, l'affichage sur cet écran étant commandé par un procédé d'affichage selon l'invention ainsi qu'un aéronef comportant au moins cet écran ou un écran multi-usage dont l'affichage est commandé par un procédé d'affichage selon l'invention.

L'invention sera mieux comprise et d'autres avantages apparaîtront à la lecture de la description qui va suivre donnée à titre non limitatif et grâce aux figures annexées parmi lesquelles :
- La figure 1 représente une vue schématique d'une représentation cartographique des données altimétriques et des zones aéronautiques selon l'art antérieur ;
- La figure 2 représente une première vue schématique d'une représentation cartographique des données altimétriques et des zones aéronautiques selon l'invention ;
- La figure 3 représente une seconde vue schématique d'une représentation cartographique des données altimétriques et des zones aéronautiques selon l'invention ;
- Les figures 4 et 5 représentent une troisième vue schématique d'une représentation cartographique des données altimétriques et des zones aéronautiques selon l'invention pour deux altitudes différentes de l'aéronef ;
- La figure 6 représente une quatrième vue schématique d'une représentation cartographique des données altimétriques et des zones aéronautiques selon l'invention.

La principale source de surcharge graphique d'une représentation cartographique comportant à la fois les données altimétriques et les zones aéronautiques du terrain survolé vient des zones aéronautiques. En effet, les zones aéronautiques peuvent être nombreuses et relativement enchevêtrées dans certaines zones géographiques.

Les zones aéronautiques ont, cependant, une propriété non exploitable sur les cartes papier. Elles sont limitées en altitude et elles sont très rarement imbriquées les unes dans les autres. Les zones aéronautiques sont définies par une couverture géographique ainsi que par deux limites en altitude, la limite basse est appelée plancher et la limite haute plafond. Ainsi une première partie des zones aéronautiques ne concerne que les basses altitudes, celles situées, par exemple, autour des aéroports. Une seconde partie concerne uniquement les hautes altitudes, en général celles liées au trafic des vols en transit. Selon la phase de vol, un pilote n'aura besoin de connaître qu'une partie des zones aéronautiques. Par exemple, en phase de décollage et d'atterrissage, il est important de connaître les zones en basse altitude autour de l'aéroport, mais les zones de haute altitude surchargent inutilement la carte.

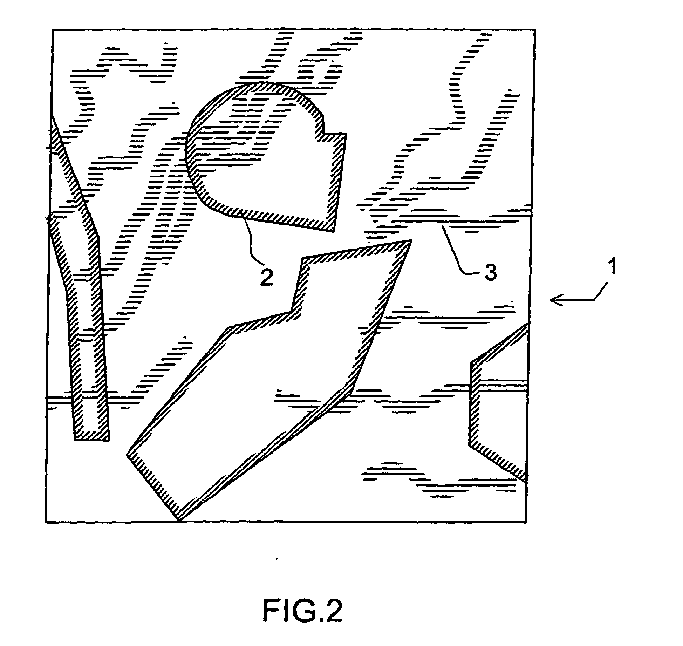

Le procédé selon l'invention repose sur cette propriété. Ainsi, le procédé affiche une représentation altimétrique du terrain survolé ne comportant que les zones aéronautiques comprises dans une plage d'altitude correspondant à la phase de vol de l'aéronef, comme montré en figure 2. Celle-ci représente la même représentation cartographique que la figure 1, mais dans laquelle seules les zones aéronautiques 2 concernées par la phase de vol de l'aéronef ont été affichées.

La mise en oeuvre du procédé est aisé. Le procédé doit comporter des étapes de filtrage automatique des zones aéronautiques en fonction de la localisation géographique et de la position verticale de l'aéronef. Les étapes de filtrage en fonction de la position verticale de l'aéronef réalisent les fonctions suivantes :
- Calcul des limites d'altitude inférieure et supérieure de l'aéronef. Ces limites peuvent être déterminées en ajoutant et en retranchant à l'altitude courante de l'aéronef une marge déterminée.
- Détermination des zones aéronautiques dont le plafond est supérieur à la limite d'altitude inférieure et le plancher inférieur à la limite d'altitude supérieure.

Ainsi les zones dont les altitudes plancher ou plafond sont éloignées de celle du porteur ne sont pas affichées à l'écran. Le plafond et le plancher de ces zones peuvent être définis soit par rapport au niveau de vol, en anglais « flight level » qui est l'altitude donnée par rapport à une pression barométrique standard, soit par rapport au niveau moyen des mers, soit encore par rapport à la hauteur par rapport au sol. Cette sélection des zones allège considérablement l'affichage, car certaines zones sont définies très bas autour des aéroports et n'intéressent pas un pilote en phase de croisière à une altitude élevée. De même, certaines zones sont définies en haute altitude pour les aéronefs en croisière, et n'intéressent pas les avions en phase d'approche.

Selon la position de l'aéronef dans l'espace, on connaît facilement les zones aéronautiques à portée de l'aéronef. Ainsi, on ne montre également au pilote que les zones aéronautiques pouvant impacter son vol.

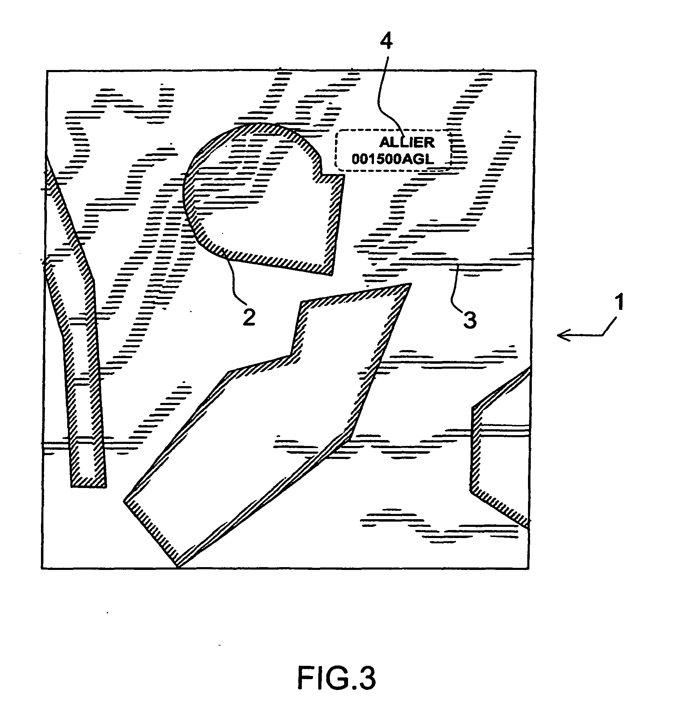

Sur la figure 2, aucun cartouche n'est affiché pour alléger encore le graphisme. Cependant, l'affichage des cartouches utiles est important pour connaître les types d'accès des zones aéronautiques, la fréquence radio associée et d'autres paramètres utiles de la zone. Afficher les cartouches de toutes les zones en même temps alourdit inutilement la présentation cartographique. En effet, le pilote a rarement besoin de toutes ces informations simultanément. Dans la pratique, seuls les cartouches des zones traversées par l'aéronef sont utiles au pilote. Selon les zones à traverser, le pilote a besoin de connaître les conditions d'accès ainsi que les fréquences radio associées. Aussi, le procédé selon l'invention permet de n'afficher qu'un cartouche à la fois comme représenté en figure 3 qui est identique à la figure 2 à l'affichage près du cartouche 4, l'affichage du cartouche étant sélectionné par l'utilisateur au moyen des postes de commande de l'aéronef.

Les figures 2 et 3 montrent des représentations cartographiques des données altimétriques et des zones aéronautiques selon l'invention en vue de dessus dans une seule fenêtre d'affichage. Pour une meilleure appréciation de la situation géométrique des zones aéronautiques, il est avantageux de présenter dans une seconde fenêtre d'affichage 10 une vue en coupe verticale du relief du terrain et des zones aéronautiques. Le pilote appréhende ainsi plus facilement les zones aéronautiques impactées par une trajectoire définie de son aéronef. Cette présentation donne une interprétation tridimensionnelle aisée de la position des zones aéronautiques. Elle permet une très bonne représentation de la situation verticale des zones et allège ainsi considérablement le travail d'anticipation du pilote. Une maquette d'aéronef 7 peut être représentée sur la vue en coupe afin de faciliter encore la localisation de l'aéronef par rapport au relief.

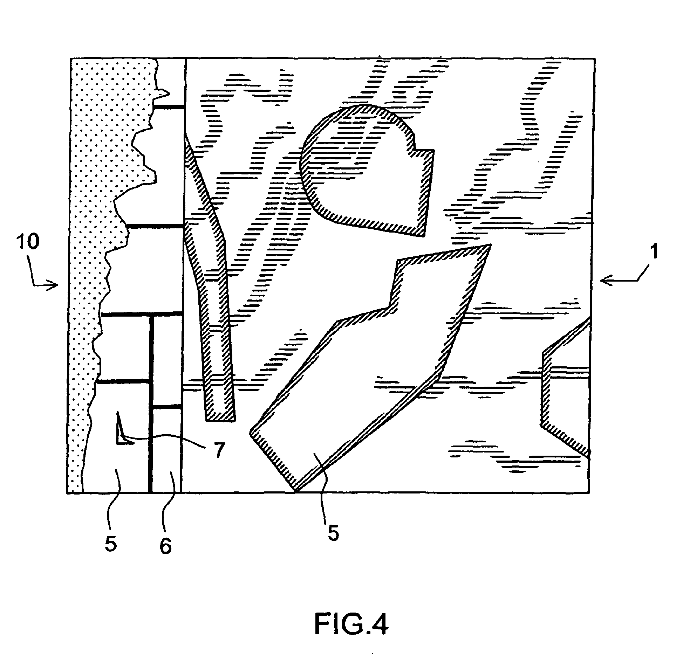

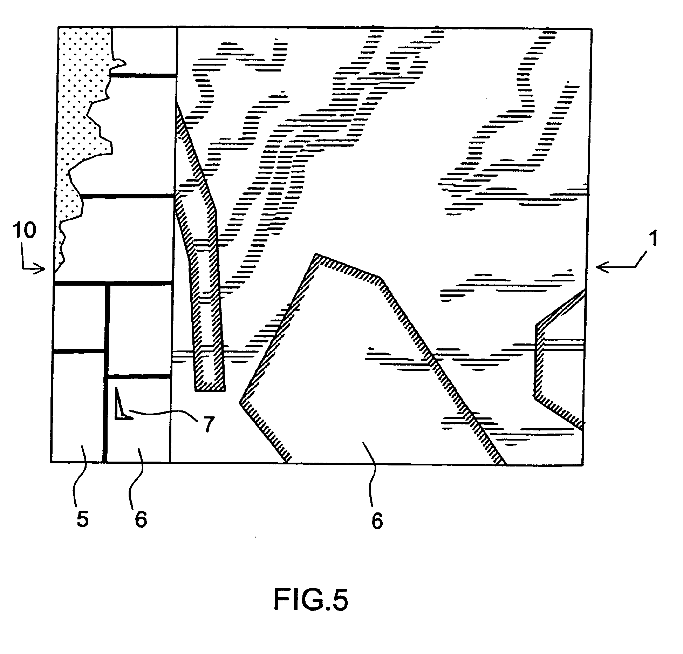

Les figures 4 et 5 représentent une vue schématique d'une représentation cartographique des données altimétriques et des zones aéronautiques comportant deux fenêtres 1 et 10, la fenêtre principale 1 représentant une vue de dessus, la fenêtre latérale 10 représentant une vue en coupe. Les figures 4 et 5 représentent la même portion de terrain pour deux altitudes différentes de l'aéronef, l'altitude de l'aéronef de la figure 5 étant supérieure à celle de celui de la figure 4. En fonction de l'altitude, les zones aéronautiques représentées changent. Ainsi, sur la figure 4, l'avion est à l'intérieur de la zone aéronautique 5 et sous la zone aéronautique 6 comme on peut le voir sur la vue en coupe. Sur la vue de dessus, seule la zone aéronautique 5 est représentée. Sur la figure 5, l'avion est au-dessus de la zone aéronautique 5 et à l'intérieur de la zone aéronautique 6 comme on peut le voir sur la vue en coupe. Sur la vue de dessus, seule la zone aéronautique 6 est représentée.

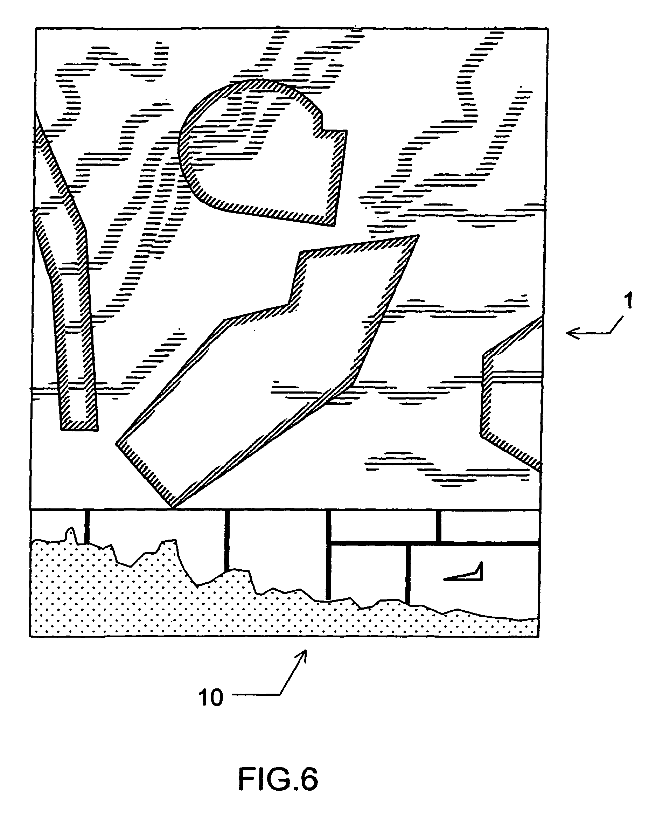

Sur les figures 4 et 5, la fenêtre 10 représentant la vue en coupe est accollée à un des côtés verticaux de la fenêtre 1. Pour des raisons de confort ou de forme du dispositif de visualisation d'affichage, la fenêtre 10 peut être placée sur un des côtés horizontaux de la fenêtre 1 comme montré sur la figure 6.

Le procédé de synthèse selon l'invention nécessite des moyens qui sont habituellement disponibles sur les systèmes d'avionique et d'hélivionique des aéronefs modernes.

Le système complet permettant l'affichage de l'image tridimensionnelle selon l'invention comprend :
- Un ou plusieurs interfaces Homme-Machine de type postes de commande permettant au pilote de sélectionner les informations qui lui sont nécessaires et en particulier l'affichage des cartouches liés aux zones aéronautiques.
- Des moyens de localisation géographique de l'aéronef dans l'espace comprenant :
- Des senseurs (centrale inertielle, système de localisation par satellite de type GPS (Global Positioning system),...) ;
- Des capteurs (sondes anémo-barométriques, capteurs gyroscopiques, accéléromètres,...)
- Une unité de navigation assurant le traitement des données issues des chaînes de senseurs et de capteurs et permettant de déterminer la position géographique, l'altitude et l'attitude de l'aéronef.
- Une unité de génération d'une image cartographique de synthèse comportant l'image du terrain et des zones aéronautiques représentées selon l'un des modes de présentation selon l'invention. Ladite unité comprend :
   - Une base de données cartographiques comprenant au moins les informations de relief du terrain ;
   - Une base de données intégrant les informations des cartes aéronautiques ;
   - Une unité de traitement et de filtrage automatique des zones aéronautiques en fonction de la localisation géographique et de la position verticale de l'aéronef ;
- Au moins, un dispositif de visualisation disposé sur la planche de bord de type MFD, acronyme anglo-saxon de « Multi Function Display» permettant la représentation en temps réel de l'image tridimensionnelle du terrain et des zones aéronautiques soit sur une seule fenêtre soit sur deux fenêtres.

Des liaisons électroniques relient les différentes unités du système complet. La transmission des différentes informations se fait par bus de données selon des standards propres à l'aéronautique.

Le procédé est plus particulièrement dédié aux applications d'hélivionique et au vol à vue sur hélicoptères.

## Revendications

1. Procédé de synthèse, sur un écran d'aéronef, d'au moins une première fenêtre (1) représentant une image cartographique en vue de dessus d'un terrain survolé par ledit aéronef, l'image cartographique étant élaborée à partir d'une première information altimétrique dudit terrain et d'une seconde information représentant les zones aéronautiques, **caractérisé en ce que** le procédé affiche, dans ladite fenêtre, une représentation altimétrique (3) du terrain survolé comportant les zones aéronautiques (2) comprises dans une plage d'altitude correspondant à la phase de vol de l'aéronef, lorsque l'image cartographique du terrain survolé est une vue de dessus, la limite d'une zone aéronautique est représentée par un trait plein fin coloré prolongé par une bordure semi-transparente colorée située à l'intérieur de la dite zone, la couleur du trait et de la bordure dépendant du type de zone.

2. Procédé de synthèse selon la revendication 1, **caractérisé en ce que** le procédé comporte au moins des étapes de filtrage automatique des zones aéronautiques (2) en fonction de la localisation géographique et de la position verticale de l'aéronef.

3. Procédé de synthèse selon la revendication 2, **caractérisé en ce que** les étapes de filtrage en fonction de la position verticale de l'aéronef sont :
• Calcul des limites d'altitude inférieure et supérieure de l'aéronef, lesdites limites étant déterminées en ajoutant et en retranchant à l'altitude courante de l'aéronef une marge déterminée.
• Détermination des zones aéronautiques dont le plafond est supérieur à la limite d'altitude inférieure et le plancher inférieur à la limite d'altitude supérieure.

4. Procédé de synthèse selon l'une des revendications précédentes, **caractérisé en ce que** le procédé synthétise au moins une seconde fenêtre (10) représentant une représentation altimétrique en coupe verticale du terrain survolé, comportant les zones aéronautiques vues en coupe verticale.

5. Procédé de synthèse selon l'une des revendications précédentes, **caractérisé en ce que**, lorsque l'image cartographique du terrain survolé est une vue de dessus, la représentation altimétrique comporte un ombrage représentatif du relief du terrain.

6. Procédé de synthèse selon l'une des revendications précédentes, **caractérisé en ce que**, lorsque l'image cartographique du terrain survolé est une vue de dessus, le procédé affiche au moins un cartouche d'information correspondant à une zone aéronautique, ledit cartouche étant sélectionné par l'utilisateur dudit procédé.

7. Procédé de synthèse selon la revendication 6, **caractérisé en ce que** le cartouche comporte le nom de la zone, sa fréquence radio, son type, son plafond et son plancher.

8. Ecran de visualisation, **caractérisé en ce que** l'affichage sur cet écran est commandé par un procédé d'affichage selon l'une quelconque des revendications précédentes.

9. Hélicoptère **caractérisé en ce qu**'il comporte au moins un écran selon la revendication 8 ou un écran multi-usage dont l'affichage est commandé par un procédé d'affichage selon l'une des revendications 1 à 7.

## Claims

1. Method of synthesizing, on an aircraft screen, at least one first window (1) representing a cartographic image in plan view of a terrain being flown over by said aircraft, the cartographic image being generated from first altimetric information of said terrain and second information representing the aeronautical zones, **characterized in that** the method displays, in said window, an altimetric representation (3) of the terrain being flown over including the aeronautical zones (2) included in an altitude band corresponding to the flight phase of the aircraft, and **in that**, when the cartographic image of the terrain being flown over is a plan view, the limit of an aeronautical zone is represented by a fine unbroken colored line prolonged by a colored semi-transparent border located inside said zone, the color of the line and of the border depending on the zone type.

2. Synthesis method according to Claim 1, **characterized in that** the method comprises at least steps for automatically filtering the aeronautical zones (2) according to the geographic location and the vertical position of the aircraft.

3. Synthesis method according to Claim 2, **characterized in that** the filtering steps according to the vertical position of the aircraft are:
• Computation of the lower and upper altitude limits of the aircraft, said limits being determined by adding and subtracting a predetermined margin to and from the current altitude of the aircraft.
• Determination of the aeronautical zones the ceiling of which is greater than the lower altitude limit and the floor less than the upper altitude limit.

4. Synthesis method according to one of the preceding claims, **characterized in that** the method synthesizes at least one second window (10) representing an altimetric representation in vertical cross section of the terrain being flown over, comprising the aeronautical zones seen in vertical cross section.

5. Synthesis method according to one of the preceding claims, **characterized in that**, when the cartographic image of the terrain being flown over is a plan view, the altimetric representation includes a shading representative of the relief of the terrain.

6. Synthesis method according to one of the preceding claims, **characterized in that**, when the cartographic image of the terrain being flown over is a plan view, the method displays at least one box of information corresponding to an aeronautical zone, said box being selected by the user of said method.

7. Synthesis method according to Claim 6, **characterized in that** the box includes the name of the zone, its radio frequency, its type, its ceiling and its floor.

8. Display screen, **characterized in that** the display on this screen is controlled by a display method according to any one of the preceding claims.

9. Helicopter, **characterized in that** it includes at least one screen according to Claim 8, or a multi-purpose screen, the display of which is controlled by a display method according to one of Claims 1 to 7.

## Patentansprüche

1. Syntheseverfahren auf einer Luftfahrzeuganzeige mindestens eines ersten Fensters (1), das ein kartographisches Bild in Draufsicht eines von dem Luftfahrzeug überflogenen Geländes darstellt, wobei das kartographische Bild ausgehend von einer ersten Höheninformation des Geländes und einer zweiten Information, die die Luftfahrtzonen darstellt, erstellt wird, **dadurch gekennzeichnet, dass** das Verfahren in dem Fenster eine Höhendarstellung (3) des überflogenen Geländes anzeigt, das die Luftfahrtzonen (2) aufweist, die in einem Höhenbereich enthalten sind, der der Flugphase des Luftfahrzeugs entspricht, wenn das kartographische Bild des überflogenen Geländes eine Draufsicht ist, die Grenze einer Luftfahrtzone durch einen vollen farbigen Strich dargestellt ist, der von einem halb transparenten farbigen Rand verlängert ist, der sich im Inneren der Zone befindet, wobei die Farbe des Strichs und der Rand vom Zonentyp abhängen.

2. Syntheseverfahren nach Anspruch 1, **dadurch gekennzeichnet, dass** das Verfahren mindestens Schritte des automatischen Filterns der Luftfahrtzonen (2) in Abhängigkeit von der geographischen Lage und der vertikalen Position des Luftfahrzeugs aufweist.

3. Syntheseverfahren nach Anspruch 2, **dadurch gekennzeichnet, dass** die Filterschritte in Abhängigkeit von der vertikalen Position des Luftfahrzeugs die folgenden sind:
• Berechnen des unteren und oberen Höhenlimits des Luftfahrzeugs, wobei die Limits bestimmt werden, indem zu der laufenden Höhe des Luftfahrzeugs eine bestimmte Marge hinzugefügt oder von ihr abgezogen wird.
• Bestimmen der Luftfahrtzonen, deren Decke größer ist als das untere Höhenlimit und deren Boden niedriger ist als das obere Höhenlimit.

4. Syntheseverfahren nach einem der vorhergehenden Ansprüche, **dadurch gekennzeichnet, dass** das Verfahren mindestens ein zweites Fenster (10) synthetisiert, das eine Höhendarstellung im senkrechten Schnitt des überflogenen Geländes darstellt, das die im senkrechten Schnitt gezeigten Luftfahrtzonen aufweist.

5. Syntheseverfahren nach einem der vorhergehenden Ansprüche, **dadurch gekennzeichnet, dass**, wenn das kartographische Bild des überflogenen Geländes eine Draufsicht ist, die Höhendarstellung eine Schattierung aufweist, die das Relief des Geländes darstellt.

6. Syntheseverfahren nach einem der vorhergehenden Ansprüche, **dadurch gekennzeichnet, dass**, wenn das kartographische Bild des überflogenen Geländes eine Draufsicht ist, das Verfahren mindestens ein Informationsfeld anzeigt, das einer Luftfahrtzone entspricht, wobei das Schriftfeld vom Benutzer des Verfahrens ausgewählt wird.

7. Syntheseverfahren nach Anspruch 6, **dadurch gekennzeichnet, dass** das Schriftfeld den Namen der Zone, ihre Funkfrequenz, ihren Typ, ihre Decke und ihren Boden aufweist.

8. Anzeigebildschirm, **dadurch gekennzeichnet, dass** die Anzeige auf diesem Bildschirm von einem Anzeigeverfahren nach einem der vorhergehenden Ansprüche gesteuert ist.

9. Hubschrauber, **dadurch gekennzeichnet, dass** er mindestens einen Bildschirm nach Anspruch 8 oder einen Mehrzweckbildschirm aufweist, dessen Anzeige von einem Anzeigeverfahren nach einem der Ansprüche 1 bis 7 gesteuert ist.
